# EUROPEAN PATENT SPECIFICATION

(11) **EP 2 091 209 B1**
(45) Date of publication and mention of the grant of the patent: **03.04.2013**
(21) Application number: 08290159.6
(22) Date of filing: 18.02.2008
(51) Int. Cl.: H04L 29/08, H04N 21/6377, H04N 21/6332, H04N 21/231, H04N 21/6338, H04N 21/845, H04N 21/647, H04N 21/658, H04N 21/654, H04N 21/6375, H04N 21/6371

(54) **Method for selective optimization of cache memory usage in packet streams**
Verfahren für die selektive Optimierung der Cachespeichernutzung in Paketströmen
Procédé pour l'optimisation sélective d'utilisation de mémoire cache dans des flux de paquets

(43) Date of publication of application: 19.08.2009
(73) Proprietor: Alcatel Lucent, 75007 Paris (FR)
(72) Inventor: Van Leekwijck, Werner Adriaan Josephine, 2610 Antwerp (BE); Struyve, Kris, 8400 Oostende (DE)
(74) Representative: Vandenbroeck, Josiane Anne Marie

(56) References cited:
- US-A1- 2002 198 953
- US-A1- 2003 115 421
- US-A1- 2005 102 290
- US-B1- 7 130 882

## Description

The present invention relates to a method for selective optimization of cache memory usage in packet streams as is further described in the preamble of claim 1.

Nowadays more and more applications need reliable delivery of packets, and therefore rely on a retransmission mechanism. Examples are the well-known TCP/IP protocol , and extensions to the RTP protocol where, in case the client did not correctly receive the packets, these will be retransmitted by the server or intermediate element To this purpose, the client application, noticing it has not received a certain packet ,e.g. via missing sequence numbers, requests to the server the retransmission of the packet. Alternatively, it does not confirm the reception of that packet. The server then retransmits the packet. This means that the server or an intermediate network element providing the retransmission service needs to cache or temporarily store all sent packets for a certain amount of time. With increasing bandwidth and delay sensitive applications, the required size of the cache grows.

US2005/0102290 discloses a method in which a server instructs a storage device whether or not the cache of data requested by the client is needed or not based on a rule table defined by the server.

It is an object of the present invention to provide a method of the above known kind, but which can solve the aforementioned problems of growing cache memory needs.

According to the invention this object is achieved by the method including the step as described in the characterizing portion of claim 1.

By the signaling, either by the client, or either by the server of information related to which type of data packets do or do not have to be cached, a simple solution is obtained. This simple solution is possible due to the fact that in some applications, not all packets are of the same importance. This is for instance the case for MPEG video packets, where a distinction between packets carrying I, P and B frames can be made. These I,P, B frames are defined within the MPEG standards and respectively relate to macroblocks coded using intra-prediction, inter-prediction with one motion-compensated prediction signal, and two motion-compensated prediction signals. Depending on the application specific types of B-frames do not need to be retransmitted, as some emerging application-level techniques can also disguise the non-reception of certain packets. Amongst them there are for instance error concealment techniques for video packets. As a result, certain applications at the client don't really need to ask anymore for the retransmission of a lower-importance packet.

The invention relates as well to a client adapted to generate and transmit such a signal, as set out in claim 2, or a server adapted to generate and transmit such a signal, as set out in claim 3. The invention relates as well to a cache memory device adapted to receive , analyze such signals, as set out in claim 5.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Figs. 1a and 1b schematically shows typical prior art situations and
Figs. 2a and 2b show embodiments of the invention.

It is to be remarked that the following merely illustrates the principles of the invention. It will thus be appreciated that those skilled in the art will be able to devise various arrangements that, although not explicitly described or shown herein, embody the principles of the invention and are included within its scope as defined by the claims. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

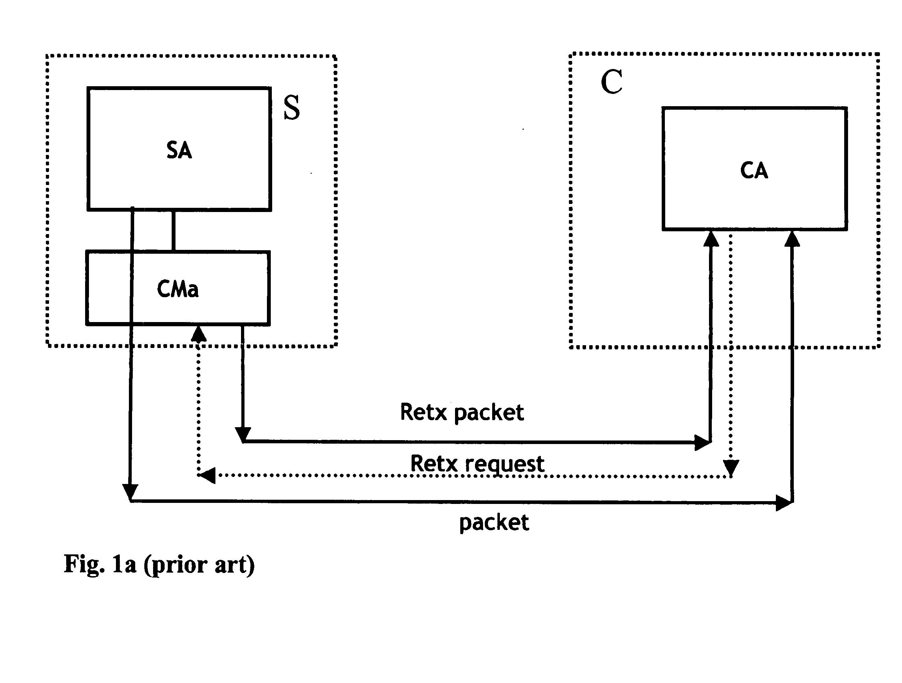

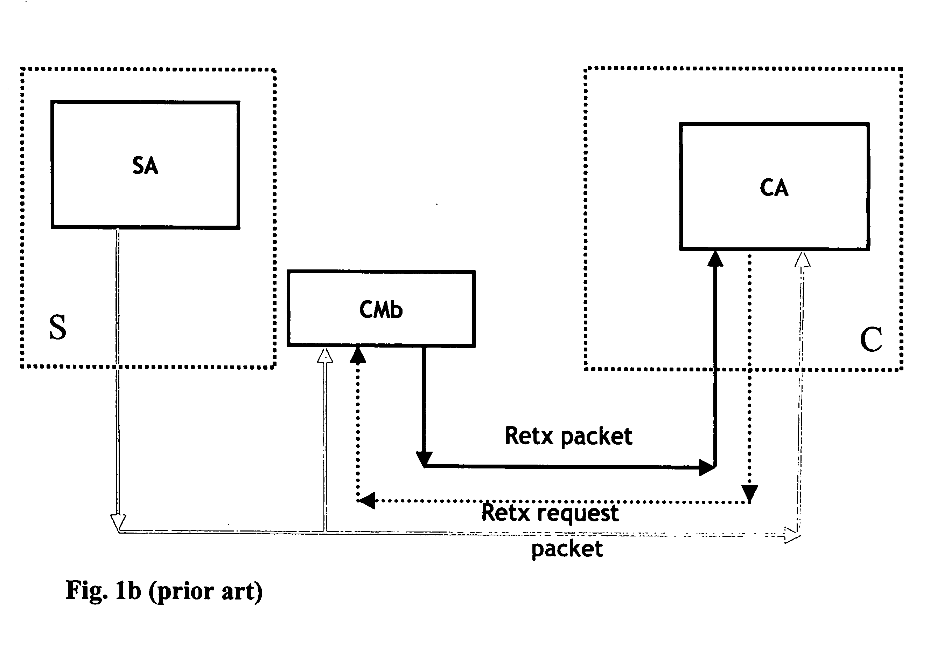

The present invention describes a method to reduce the amount of cache memory needed during transmission of data for these protocols based on retransmission of data in case of non-reception of the data by the client. Using prior art methods all packets are cached or temporarily stored for a certain amount of time, until the client acknowledges receipt of packets, upon which they can be removed from the cache. A typical prior art situation is depicted in Figs. 1a and 1b, which show a server application denoted SA, such as a video application, running on a server such as a computer, and a client application denoted CA , such as a video client program running on a client, such as a personal computer, set-top box, television, mobile phone, PDA,....

In Fig. 1a the server further includes a cache memory, denoted Cma, being part of the server. In Fig. 1b the cache memory is part of a separate network element such as another computer, a router, an intermediate network node,...in the network between the server and the client.

In both Figs1a and 1b, the grey arrow with "packet" annotation indicates a packet being transmitted from the server to the client, by means of the server application. At the same time this packet is as well transmitted to the cache memory for reasons of reliability such as to allow retransmission in case of non-reception by the client. In the latter case the client generates and sends a retransmission request towards the cache memory, depicted by the dotted arrow line with the annotation "Retx request". Upon receipt of this retransmission request by the cache memory, the latter device then retransmits the original packet to the client. This is indicated on both figures by means of the grey arrow with "Retx packet" . In case the packet is received correctly by the client application, the latter does not generate a retransmission request message, and after some predetermined time, the packet is removed from the cache memory.

As already mentioned the prior art methods require a lot of cache memory to temporarily store packets, especially with these applications which are very bandwidth intensive such as video transmission. The present invention therefore can reduce the amount of cache memory needed . To this purpose the method includes a step of sending a signal or message by either the client or the server to the cache which signal or message thereby indicates which class/type of packets need to be cached for potential retransmission. Alternatively this message can also indicate which class or type of packets do not need to be cached for potential retransmission. This can be preferable in case packets marked with a certain bit pattern in certain bit positions do not have to be cached. This indication can thus be done by means of a specification of bit position and pattern in the packet, a special header field, etc.

Consequently the other types of packets do not need to be cached anymore and the cache then only needs to store a subset of the packet stream, so in general being the most important packets.

In the specific case of video transmission of video packets where the capabilities for error concealment can differ from client to client, the client is best placed to signal to the cache server which class of packets to cache or not to cache, such as specific type of B-frames for video applications for the latter case.

However in other applications the server itself can already know which type of packets can be overlooked, such that the other ones have to be stored. This could for instance be the case in the same or other video applications where the server application decides not to cache these or other types of B packets because of network performance reasons such as delay optimisatione etc. In this case the server is adapted to generate a message to the cache memory. In other embodiments, this same message will also be transmitted by the server to the client, for informing the client that some types of packets will no longer be cached and that consequently retransmission of these types of packets will be impossible. This will prevent the client from generating retransmission requests for these types of packets which are no longer cached.

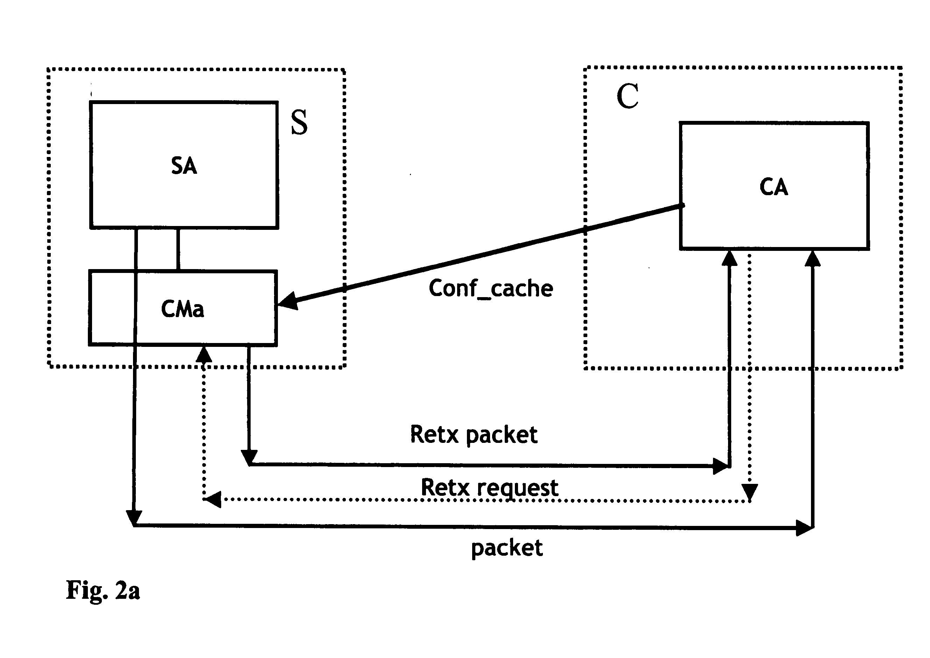

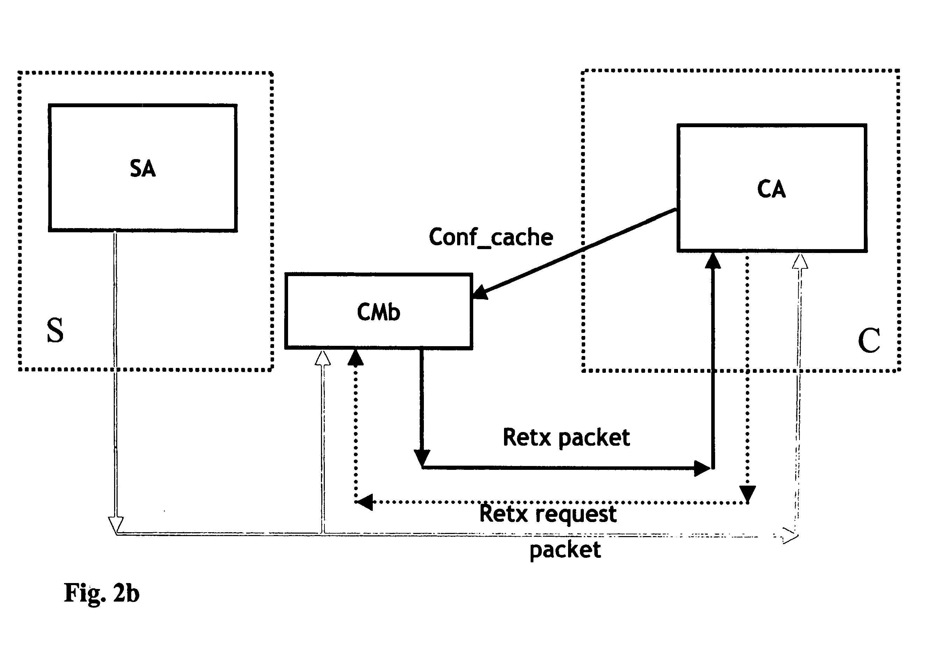

The figures 2a and 2b illustrate these principles for the case that the client informs the cache memory about the type of data packets to be stored or not. Figures 2a and 2b differ from Figs 1a and 1b in that an additional message from the client to the cache memory devices is added. This additional message is denoted by the thick black arrow with "config_cache" annotation.

This method is mainly used in those applications wherein the client has some tools for performing error concealment in case a packet is not received. This is the case for a typical Video On Demand session with RTP -level cache servers in the network: RTP streams are delivered from server to client, and cached in a cache memory either of the RTP server itself as in Fig. 2a, or part of a retransmission server being a separate device as Fig. 2b indicates. The client can signal to this cache memory which type of packets it might ask retransmissions for, and from that time onwards, the cache memory only caches those packet for this video stream.

This message "config_cache" sent from the client to the cache may for instance contain a cache_flag (on/off), off_set, bit_pattern), whereby the cache_flag can be set to a value indicating to cache , or not to cache. Off-set indicates a bit position or a range of bit positions, for instance starting from the header of the packet, and bit_patterns can then indicate which bit patterns to store (in case the cache-flag was on) or not to store (in case the cache-flag was off), in these specific bit positions.

Of course a lot of different ways for signalling are possible as is well known by a person skilled in the art.

As previously mentioned, in other embodiments the server may also generate and transmit such a "conf_cache" message. In yet another embodiment the client can first inform the server which type of packets have to be temporarily stored or not, upon which step the server informs the cache memory about this. And yet in other embodiments the server itself can autonomously determine and generate the "conf_cache " message, and send it to the cache memory and to the client.

While the principles of the invention have been described above in connection with specific apparatus, it is to be clearly understood that this description is made only by way of example and not as a limitation on the scope of the invention, as defined in the appended claims.

## Claims

1. Method for selective optimization of cache memory (CMa; CMb) usage for retransmission of data in packet streams, said method including a step of setting up a session pertaining to a retransmission protocol between a client (C) and a server (S), a step of transmitting a plurality of data packets packets pertaining to said session from said server (S) to said client (C), a step of temporarily storing a subset of said plurality of packets within said cache memory (CMa; CMb) for allowing retransmission of said packets if a retransmission request is received by said cache memory,
**characterized in that** said method includes an additional step of communicating, by said client (C) or by said server (S), to said cache memory CMa; CMb), information related to at least one type of data packets which do or do not have to be temporarily stored, for thereby allowing or preventing said at least one type of data packets from being retransmitted according to said retransmission protocol.

2. Client (C) adapted to communicate with a server (S) within a communication session set up between said client (C) and said server (S), said client (C) being further adapted to communicate with a cache memory (CMα; CMb) in between said client and said server, whether or not retransmission of at least one data packet is needed,
**characterized in that** said client (C) is further adapted to generate an additional communication message (Conf_cache) to said cache memory (CMa; CMb), including information about which type of data packets do or do not need to be temporarily stored within said cache memory (CMa; CMb) during said communication session.

3. Server (S) adapted to communicate with a client (C) within a communication session set up between said client and said server, said client being further adapted to communicate with a cache memory (CMa; CMb) whether or not retransmission of at least one data packet is needed,
**characterized in that** said server (S) is being further adapted to generate an additional communication message to said cache memory (CMa; CMb), including information about which type of data packets do or do not need to be temporarily stored within said cache memory (CMa; CMb) during said communication session.

4. Server (S) according to claim 3 being further adapted to further transmit said additional communication message to said client.

5. Client (C) adapted to communicate with a server (S) according to claim 4, within a communication session set up between said client (C) and said server (S), said client (C) being further adapted to communicate with a cache memory (CMa; CMb) in between said client and said server, whether or not retransmission of at least one data packet is needed,
**characterized in that** said client (C) is further adapted to receive from said server said additional communication message , to analyse said additional communication message and to use said analysis for communicating with said cache memory whether or not retransmission of at least one data packet is needed.

6. Cache memory device (CMa; CMb) adapted to temporarily store a subset of a plurality of data packets pertaining to a communication session set up between a server and a client, and to retransmit at least one of said data packets, upon receiving a signal from said client for informing that said at least one data packet was not received properly by said client,
**characterized in that** said cache memory device (CMa; CMb) is further adapted to receive an additional communication message (conf_cache) from said client or from said server, for informing said cache memory device upon which type of data packets said cache memory device has to store or not.

## Patentansprüche

1. Verfahren für die selektive Optimierung der Nutzung des Cachespeichers (CMa;
CMb) zur Wiederübertragung von Daten in Paketströmen, wobei das besagte Verfahren einen Schritt des Aufbauens einer Sitzung, die sich auf ein Wiederübertragungsprotokoll bezieht, zwischen einem Client (C) und einem Server (S), einen Schritt des Übertragens einer Vielzahl von Datenpaketen der besagten Sitzung von dem besagten Server (S) an den besagten Client (C), einen Schritt des Zwischenspeicherns eines Teilsatzes der besagten Vielzahl von Paketen innerhalb des besagten Cachespeichers (CMa; CMb) zum Ermöglichen einer Wiederübertragung der besagten Pakete, wenn an dem besagten Cachespeicher eine Wiederübertragungsanforderung empfangen wird, umfasst,
**dadurch gekennzeichnet, dass** das besagte Verfahren einen zusätzlichen Schritt des Übermittelns, durch den besagten Client (C) oder durch den besagten Server (S), von Informationen in Bezug auf mindestens einen Typ von Datenpaketen, welche vorübergehend gespeichert oder nicht gespeichert werden sollen, an den besagten Cachespeicher (CMa; CMb) umfasst, um eine Wiederübertragung des besagten mindestens einen Typs von Datenpaketen gemäß dem besagten Wiederübertragungsprotokoll zu ermöglichen oder zu verhindern.

2. Client (C), ausgelegt für das Kommunizieren mit einem Server (S) während einer zwischen dem besagten Client (C) und dem besagten Server (S) aufgebauten Kommunikationssitzung, wobei der besagte Client (C) weiterhin für das Kommunizieren mit einem zwischen dem besagten Client und dem besagten Server angeordneten Cachespeicher (CMa; CMb) ausgelegt ist, um zu bestimmen, ob eine Wiederübertragung zumindest eines Datenpakets erforderlich ist oder nicht,
**dadurch gekennzeichnet, dass** der besagte Client (C) weiterhin für das Erzeugen einer zusätzlichen Kommunikationsnachricht (Conf cache) mit Informationen darüber, welcher Typ von Datenpaketen vorübergehend in dem besagten Cachespeicher (CMa; CMb) während der besagten Kommunikationssitzung gespeichert werden soll oder nicht, an den besagten Cachespeicher (CMA; CMb) ausgelegt ist.

3. Server (S), ausgelegt für das Kommunizieren mit einem Client (C) während einer zwischen dem besagten Client und dem besagten Server aufgebauten Kommunikationssitzung, wobei der besagte Client weiterhin für das Kommunizieren mit einem Cachespeicher (CMa; CMb) ausgelegt ist, um zu bestimmen, ob eine Wiederübertragung zumindest eines Datenpakets erforderlich ist oder nicht,
**dadurch gekennzeichnet, dass** der besagte Server (S) weiterhin für das Erzeugen einer zusätzlichen Kommunikationsnachricht mit Informationen darüber, welcher Typ von Datenpaketen vorübergehend in dem besagten Cachespeicher (CMa; CMb) während der besagten Kommunikationssitzung gespeichert werden soll oder nicht, an den besagten Cachespeicher (CMA; CMb) ausgelegt ist.

4. Server (S) nach Anspruch 3, weiterhin ausgelegt für das weitere Übertragen der besagten zusätzlichen Kommunikationsnachricht an den besagten Client.

5. Client (C), ausgelegt für das Kommunizieren mit einem Server (S) gemäß Anspruch 4 während einer zwischen dem besagten Client (C) und dem besagten Server (S) aufgebauten Kommunikationssitzung, wobei der besagte Client (C) weiterhin für das Kommunizieren mit einem zwischen dem besagten Client und dem besagten Server angeordneten Cachespeicher (CMa; CMb) ausgelegt ist, um zu bestimmen, ob eine Wiederübertragung zumindest eines Datenpakets erforderlich ist oder nicht,
**dadurch gekennzeichnet, dass** der besagte Client (C) weiterhin für den Empfang einer zusätzlichen Kommunikationsnachricht von dem besagten Server ausgelegt ist, um die besagte zusätzliche Kommunikationsnachricht zu analysieren und die besagte Analyse für das Kommunizieren mit dem besagten Cachespeicher darüber, ob eine Wiederübertragung zumindest eines Datenpakets erforderlich ist oder nicht, zu verwenden.

6. Cachespeichervorrichtung (CMa; CMb), ausgelegt für das vorübergehende Speichern eines Teilsatzes einer Vielzahl von Datenpaketen, die sich auf eine zwischen einem Server und einem Client aufgebaute Kommunikationssitzung beziehen, und für die Wiederübertragung zumindest eines der besagten Datenpakete bei Empfang eines Signals von dem Client, um darüber zu informieren, dass das besagte zumindest eine Datenpaket nicht korrekt an dem besagten Client empfangen wurde,
**dadurch gekennzeichnet, dass** die besagte Cachespeichervorrichtung (CMa; CMb) weiterhin für den Empfang einer zusätzlichen Kommunikationsnachricht (conf_cache), welche die besagte Cachespeichervorrichtung darüber informiert, welcher Typ von Datenpaketen in dem besagten Cachespeicher gespeichert werden soll oder nicht, von dem besagten Client oder von dem besagten Server ausgelegt ist.

## Revendications

1. Procédé d'optimisation sélective de l'utilisation d'une mémoire cache (CMa ; CMb) pour la retransmission de données en flux de paquets, ledit procédé comprenant une étape d'établissement d'une session appartenant à un protocole de retransmission entre un client (C) et un serveur (S), une étape de transmission d'une pluralité de paquets de données appartenant à ladite session dudit serveur (S) vers ledit client (C), une étape de stockage temporaire d'un sous-ensemble de ladite pluralité de paquets au sein de ladite mémoire cache (CMa ; CMb) pour permettre la retransmission desdits paquets si une demande de retransmission est reçue par ladite mémoire cache,
**caractérisé en ce que** ledit protocole comprend une étape supplémentaire de communication, par ledit client (C) ou par ledit serveur (S), à ladite mémoire cache (CMa ; CMb), d'informations en rapport avec au moins un type de paquets de données qui doivent ou ne doivent pas être stockés temporairement, afin de permettre ou d'empêcher ainsi audit au moins un type de paquets de données d'être transmis conformément audit protocole de retransmission.

2. Client (C) adapté pour communiquer avec un serveur (S) au sein d'une session de communication entre ledit client (C) et ledit serveur (S), ledit client (C) étant en outre adapté pour communiquer avec une mémoire cache (CMa ; CMb) entre ledit client et ledit serveur pour indiquer si la retransmission d'au moins un paquet de données est requise ou non,
**caractérisé en ce que** ledit client (C) est en outre adapté pour générer un message de communication (Conf_cache) supplémentaire vers ladite mémoire cache (CMa ; CMb), incluant des informations sur le type de paquets de données qu'il est nécessaire ou non de stocker temporairement dans ladite mémoire cache (CMa ; CMb) pendant ladite session de communication.

3. Serveur (S) adapté pour communiquer avec un client (C) au sein d'une session de communication entre ledit client et ledit serveur, ledit client étant en outre adapté pour communiquer avec une mémoire cache (CMa ; CMb) pour indiquer si la retransmission d'au moins un paquet de données est requise ou non,
**caractérisé en ce que** ledit serveur (S) est en outre adapté pour générer un message de communication supplémentaire vers ladite mémoire cache (CMa ; CMb), incluant des informations sur le type de paquets de données qu'il est nécessaire ou non de stocker temporairement dans ladite mémoire cache (CMa ; CMb) pendant ladite session de communication.

4. Serveur (S) selon la revendication 3, adapté en outre pour transmettre en plus ledit message de communication supplémentaire audit client.

5. Client (C) adapté pour communiquer avec un serveur (S) selon la revendication 4, au sein d'une session de communication entre ledit client (C) et ledit serveur (S), ledit client (C) étant en outre adapté pour communiquer avec une mémoire cache (CMa ; CMb) entre ledit client et ledit serveur pour indiquer si la retransmission d'au moins un paquet de données est requise ou non,
**caractérisé en ce que** ledit client (C) est en outre adapté pour recevoir de la part dudit serveur ledit message de communication supplémentaire, pour analyser ledit message de communication supplémentaire et pour utiliser ladite analyse pour communiquer avec ladite mémoire cache afin d'indiquer si la retransmission d'au moins un paquet de données est requise ou non.

6. Dispositif de mémoire cache (CMa ; CMb) adapté pour stocker temporairement un sous-ensemble d'une pluralité de paquets de données appartenant à une session de communication établie entre un serveur et un client, et pour retransmettre au moins l'un desdits paquets de données sur réception d'un signal de la part dudit client pour informer que ledit au moins un paquet de données n'a pas été reçu correctement par ledit client,
**caractérisé en ce que** ledit dispositif de mémoire cache (CMa ; CMb) est en outre adapté pour recevoir un message de communication (Conf_cache) supplémentaire de la part dudit client ou de la part dudit serveur, pour informer ledit dispositif de mémoire cache au sujet du type de paquets de données que ledit dispositif de mémoire cache doit stocker ou non.
